# FASCICULE DE BREVET EUROPEEN

(11) **EP 2 018 231 B1**
(45) Date de publication et mention de la délivrance du brevet: **16.07.2014**
(21) Numéro de dépôt: 07729202.7
(22) Date de dépôt: 16.05.2007
(51) Int. Cl.: B05B 17/00, B05B 9/00

(54) **USAGE D'UN INJECTEUR DE REACTIF POUR EQUIPER UN REACTEUR DE TRAITEMENT D'EAU, COMPRENANT UNE BUSE ASSOCIEE A UN ORGANE DE DISPERSION**
GEBRAUCH EINER REAGENZIENEINSPRITZVORRICHTUNG ZUM ANBRINGEN AN EINEM WASSERBEHANDLUNGSREAKTOR MIT EINER EINEM DISPERSIONSGLIED ZUGEORDNETEN DÜSE
USE OF AN REAGENT INJECTOR FOR EQUIPPING A WATER TREATMENT REACTOR, COMPRISING A NOZZLE ASSOCIATED WITH A DISPERSING MEMBER

(30) Priorité: 19.05.2006 FR 0604524
(43) Date de publication de la demande: 28.01.2009
(73) Titulaire: Veolia Water Solutions & Technologies Support, 94410 Saint-Maurice (FR)
(72) Inventeur: MALOUM, Abderrahmane, 92700 Colombes (FR); GAID, Abdelkader, 75014 Paris (FR)
(74) Mandataire: Larcher, Dominique
(86) Numéro de dépôt international: PCT/EP2007/054754
(87) Numéro de publication internationale: WO 2007/135054

(56) Documents cités:
- WO-A-02/060592
- DE-A1- 19 654 321
- DE-A1- 19 757 795
- DE-A1- 19 902 712

## Description

Le domaine de l'invention est celui du traitement de l'eau. Plus précisément, l'invention concerne les techniques d'adoucissement des eaux, en particulier potables, et notamment les techniques de traitement d'eau par décarbonatation.

Dans le domaine de l'invention, il est connu de procéder à la décarbonatation de l'eau par élimination du carbonate de calcium (CaCO₃) et de la magnésie (Mg (OH)₂) soit par échange d'ions avec une résine sodique soit par ajout d'eau à traiter d'un réactif basique provoquant une précipitation des carbonates et de la magnésie qu'il faut ensuite filtrer. Les réactions mises en jeu, soit avec l'hydroxyde de sodium soit avec de la chaux hydratée sont du type suivant :

Ca (HCO₃)₂ + 2NaOH→ CaCO₃ + Na₂ CO₃ + 2 H₂O

Ca (HCO₃)₂ + Ca(OH)₂→ 2 CaCO₃ + 2 H₂O

On cherche ainsi à chuter la dureté de l'eau c'est-à-dire de son titre Hydrométrique (TH) souvent très élevé et pouvant atteindre 50 degrés de plus, de façon à ramener ce TH à des valeurs avantageusement comprises entre 8 et 15° comme le recommande, par exemple, le Conseil Supérieur d'Hygiène Publique de France (CS HPF).

Selon une solution mise en oeuvre industriellement, la décarbonatation, par exemple des eaux potables, consiste à incorporer dans la station de traitement un réacteur dans lequel l'eau brute est injectée à la base et est traitée par un agent alcalin du type précité au sein d'un matériau granuleux fin servant de germe de cristallisation pour la formation de billes de carbonate de calcium, et maintenue en fluidisation dans la masse liquide.

Des réacteurs pour la mise en oeuvre de procédés de ce type ont été proposés par l'art antérieur.

On connaît notamment un réacteur muni d'une part, dans sa partie inférieure, d'une série d'injecteurs plats constitués par deux grilles perforées comportant chacune une face de dents triangulaires et disposées tête-bêche, par lesquelles l'eau est injectée et, d'autre part, dans sa partie supérieure, d'un prolongement comprenant une série de lamelles inclinées faisant un angle de 55 à 65 degrés avec l'axe vertical du réacteur. L'agent alcalin est introduit à l'aide d'injecteurs disposés juste au-dessus du plancher et pour répartir de façon étagée sur la hauteur du réacteur.

Les injecteurs (ou buses) pour la diffusion de l'agent alcalin sont incorporés aux parois du réacteur.

Or, on constate avec ce type de réacteurs un dépôt relativement rapide de carbonate de calcium sur les injecteurs d'agent alcalin, dépôt qui, à terme, entraîne un bouchage des injecteurs.

Il est alors nécessaire de procéder à un entretien du réacteur visant notamment à déboucher les injecteurs, voire à remplacer ceux-ci.

En pratique, le dépôt de carbonate de calcium se matérialise sous forme de gros blocs sur les injecteurs.

Ces gros blocs sont retirés manuellement des injecteurs à l'aide d'un marteau et d'un burin. Bien entendu, sur l'ensemble des injecteurs, cette opération est longue et fastidieuse.

Pour accéder aux injecteurs, on procède à une vidange complète du réacteur et on lave celui-ci, généralement par un traitement à l'acide.

En outre, on cherche à récupérer les billes de carbonate de calcium qui se sont formées dans le matériau fin servant de germe de cristallisation.

Ces interventions s'avèrent en pratique très longues et enchaînent par conséquent des pertes d'exploitation considérables : en périodes cumulées, les arrêts d'exploitation peuvent en effet atteindre 6 mois sur une période d'un an.

De plus, la vidange du réacteur implique l'arrêt du processus de germination en cours. Il est donc obligatoire d'ensemencer le réacteur après chaque vidange, ce qui contribue de façon notable à augmenter les temps d'arrêt d'exploitation.

Il est donc souhaitable de limiter et/ou ralentir la formation de carbonate de calcium sur les buses d'agent alcalin, ceci pour retarder leur bouchage et espacer les interventions de maintenance.

Actuellement, les injecteurs sont généralement proposés avec un diamètre de sortie d'environ 8 mm.

On connaît, par exemple, la demande WO 02/060592 A qui présente un dispositif comprenant un réservoir de stockage intégrant un injecteur. Un liquide lubrifiant et de l'air sous pression sont acheminés dans cet injecteur, en regard duquel s'étend un élément conique. Des gouttelettes de liquide se déposent sur l'élément conique, puis forment avec l'air entrant en contact avec elles, un aérosol qui est dévié latéralement dans le réservoir par l'élément conique. L'aérosol ainsi formé est évacué par une sortie en direction d'un outil, par exemple un foret de perceuse.

Or, on constate que plus le diamètre de sortie est élevé, plus on favorise le dépôt de carbonate de calcium sur les injecteurs, ce dépôt entraînant, comme cela a déjà été indiqué, le bouchage des injecteurs nécessitant les interventions mentionnées précédemment.

Il est donc souhaitable de réduire tant que faire se peut le diamètre de sortie des injecteurs.

Toutefois, en réduisant le diamètre de sortie, on réduit également la capacité des injecteurs à diffuser largement le réactif, ceci au détriment de la réaction et donc du rendement du réacteur.

L'invention s'applique donc particulièrement aux dispositifs de décarbonatation de l'eau mais aussi, plus généralement, à tout dispositif de traitement comprenant des injecteurs de réactif dans un réacteur dans lequel le réactif est susceptible d'entraîner une dégradation ou une perte d'efficacité des injecteurs, occasionnant de ce fait des opérations périodiques d'entretien des injecteurs.

L'invention a notamment pour objectif de pallier cet inconvénient de l'art antérieur.

Plus précisément, l'invention a pour objectif de proposer un injecteur de réactif dans un réacteur de traitement d'eau qui assure une dispersion efficace du réactif tout en limitant la formation d'un dépôt du réactif sur l'injecteur ou tout autre dégradation de celui-ci.

L'invention a également pour objectif de fournir un tel injecteur qui puisse être adapté selon différentes configurations dans les réacteurs de traitement d'eau.

L'invention a aussi pour objectif de fournir un tel injecteur simple de conception, facile à mettre en oeuvre et peu coûteux à réaliser.

Ces objectifs, ainsi que d'autres qui apparaîtront par la suite sont atteints grâce à l'invention qui a pour objet l'utilisation d'un injecteur comprenant au moins une buse associée à un organe de dispersion présentant une forme conique pour injecter un jet de réactif alcalin au sein d'un réacteur d'un dispositif de traitement de potabilisation de l'eau.

Ainsi, grâce à l'invention, les moyens d'injection sont associés à des moyens de dispersion permettant de façon avantageuse de réduire le diamètre de sortie des moyens d'injection, et donc de limiter sur eux la formation d'un dépôt de réactif, tout en assurant une diffusion satisfaisante du réactif dans le réacteur.

À titre indicatif, une telle caractéristique permet de proposer des moyens d'injection efficaces avec un diamètre de sortie de l'ordre de 4 mm (contre 8 selon l'art antérieur).

Selon une solution avantageuse, ledit organe est placé en regard de ladite buse et présente une surface de dispersion s'étendant sur 360°.

Préférentiellement, ledit organe présente une forme conique dont le sommet est destiné à être centré par rapport audit jet.

On obtient ainsi une « contre-buse » particulièrement efficace et simple à réaliser.

Selon une solution avantageuse, l'injecteur utilisé comprend des moyens d'ajustement de la distance séparant ladite buse dudit organe.

On peut ainsi régler la distance entre les moyens d'injection et l'organe qui lui sont associés, de façon à assurer une dispersion satisfaisante de l'agent alcalin, notamment en fonction du débit de ce dernier.

Dans ce cas, ledit injecteur est porté par un corps présentant avantageusement une portion cylindrique filetée, ledit organe comprenant une bague filetée destinée à coopérer avec ladite portion cylindrique filetée.

On obtient de cette façon un moyen simple et efficace de réglage de la distance entre les moyens d'injection et l'organe qui lui sont associés, cette distance pouvant être modifiée simplement en faisant tourner l'organe de dispersion sur l'élément portant les moyens d'injection.

Préférentiellement, ledit corps porte un contre-écrou monté sur ladite portion cylindrique et filetée et destiné à être serré contre ladite bague filetée.

Selon une solution avantageuse, ladite forme conique et ladite bague filetée sont reliées par une cage ajourée dans laquelle s'inscrit ladite buse, ladite cage étant préférentiellement constituée par trois branches réparties autour de ladite forme conique avec un angle d'environ 120° entre elles.

L'invention peut être mise en oeuvre dans un dispositif de traitement d'eau comprenant un réacteur et au moins un injecteur d'un réactif au sein dudit réacteur, caractérisé en ce que ledit ou lesdits injecteurs comprennent chacun au moins une buse destinée à injecter un jet dudit réactif, ladite buse étant associée à un organe de dispersion dudit jet.

Selon un premier mode de réalisation d'un tel dispositif, celui-ci comprend des moyens supports dudit ou desdits injecteurs, lesdits moyens supports étant montés mobiles par rapport audit réacteur entre une position active selon laquelle ledit ou lesdits injecteurs prennent place au sein dudit réacteur et une position escamotée selon laquelle ledit ou lesdits injecteurs sont amenés hors dudit réacteur.

Un tel dispositif présente de nombreux avantages comparé aux solutions de l'art antérieur, notamment en ce qu'il permet :
- de ne pas vidanger le réacteur pour procéder à l'entretien des moyens d'injection du réactif ;
- de ne pas arrêter le processus de germination en cours et, par conséquent, d'éviter de devoir ensemencer le réacteur.

Grâce à l'invention, les temps d'intervention liés à l'entretien du réacteur, et en particulier à celui des moyens d'injection du réactif peuvent être considérablement réduits.

Des gains d'exploitation peuvent donc être envisagés de façon notable.

De plus, les opérations de maintenance peuvent être effectuées avec une grande souplesse dans le temps par rapport à celles effectuées avec les techniques connues.

En effet, antérieurement, les interventions étaient effectuées le plus souvent dans la précipitation (et dans des conditions généralement inconfortables) pour réduire tant que faire se peut les temps d'arrêt du réacteur.

En revanche, grâce à l'invention, les buses usagées peuvent être réparées et/ou entretenues à l'écart du réacteur. L'intervention consiste alors à ôter du réacteur les buses nécessitant un entretien et à les substituer par un ensemble prêt à l'emploi comprenant les buses ayant fait l'objet d'une maintenance parallèle (en temps masqué).

Le personnel en charge de la maintenance peut ainsi choisir le moment le plus approprié pour procéder à son intervention et les temps d'intervention à proximité du réacteur sont réduits.

Selon un deuxième mode de réalisation du dispositif, ledit ou lesdits injecteurs sont montés fixe sur une paroi dudit réacteur.

Dans ce cas, ledit ou lesdits injecteurs sont préférentiellement montés sur un corps destiné à s'étendre perpendiculairement à ladite paroi, ledit corps présentant à une de ses extrémités une platine de fixation destiné à être plaqué contre ladite paroi, à l'intérieur dudit réacteur, et à coopérer avec une contre-platine plaquée sur ladite paroi à l'extérieur dudit réacteur.

D'autres caractéristiques et avantages de l'invention apparaîtront plus clairement à la lecture de la description suivante de deux modes de réalisation préférentiels de l'invention, donnés à titre d'exemples illustratifs et non limitatifs, et des dessins parmi lesquels :
- la figure 1 est une vue d'un injecteur utilisé selon l'invention, monté selon un premier mode de réalisation ;
- la figure 2 est une vue d'un injecteur utilisé selon l'invention, monté selon un deuxième mode de réalisation ;
- la figure 3 est une vue éclatée du mode de réalisation illustrée par la figure 2 ;
- la figure 4 est une vue d'une structure mobile supportant un injecteur selon le mode de réalisation de la figure 1 ;
- la figure 5 est une représentation schématique d'un réacteur de décarbonatation intégrant une structure du type de celle illustrée par la figure 3.

Tel qu'indiqué précédemment, le principe de l'invention réside dans le fait d'utiliser des injecteurs de réactif pour réacteur de traitement d'eau en associant une buse à un organe de dispersion du réactif.

La suite de la description est faite en référence à une application de l'invention à un dispositif de décarbonatation de l'eau.

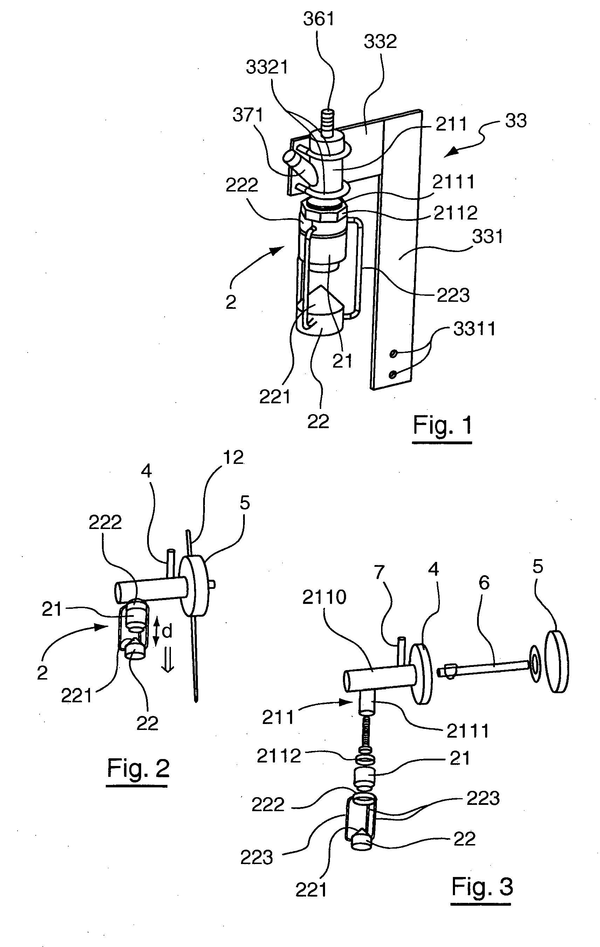

Ceci est illustré par les figures 1 et 2 qui montrent un injecteur 2 comprenant une buse 21 associée à un organe de dispersion 22 destiné à assurer la dispersion du jet d'agent alcalin issu de la buse 21.

Selon le présent mode de réalisation, l'organe 22 présente une forme conique 221 dont le sommet est dirigé vers la buse et centré par rapport à celui-ci, cette forme conique 221 constituant une surface de dispersion s'étendant sur 360° et permettant de transformer le jet en une forme de parapluie.

En outre, cet organe est monté de façon réglable en hauteur par rapport à la buse 21, ceci de façon à ajuster la distance entre le sommet de la forme conique et la sortie de la buse 21, ce qui permet d'optimiser la dispersion de l'agent alcalin.

À titre indicatif, le sommet de la forme conique est placé à une distance de l'ordre de 15 à 20 mm par rapport à la sortie de la buse.

Pour cela, l'organe 22 comprend une bague filetée 222 montée sur une portion filetée 2111 du corps 211. On comprend que la rotation de la bague filetée sur la portion de la bague filetée 2111 entraîne une translation verticale de l'organe 22 par rapport au corps 211, et donc une variation de la distance entre le sommet de la forme conique 221 et la buse 21 (qui elle est fixée sur le corps 211).

Un contre-écrou 2112 est prévu sur la portion filetée 2111 pour assurer le maintien en position verticale de l'organe 22, ceci en étant serré contre la bague filetée 222 de l'organe 22.

Tel que cela apparaît, la forme conique 221 est reliée à la bague filetée 2111 par l'intermédiaire de trois branches 223 réparties à 120° et définissant ensemble une cage ajourée dans laquelle s'inscrit la buse 21.

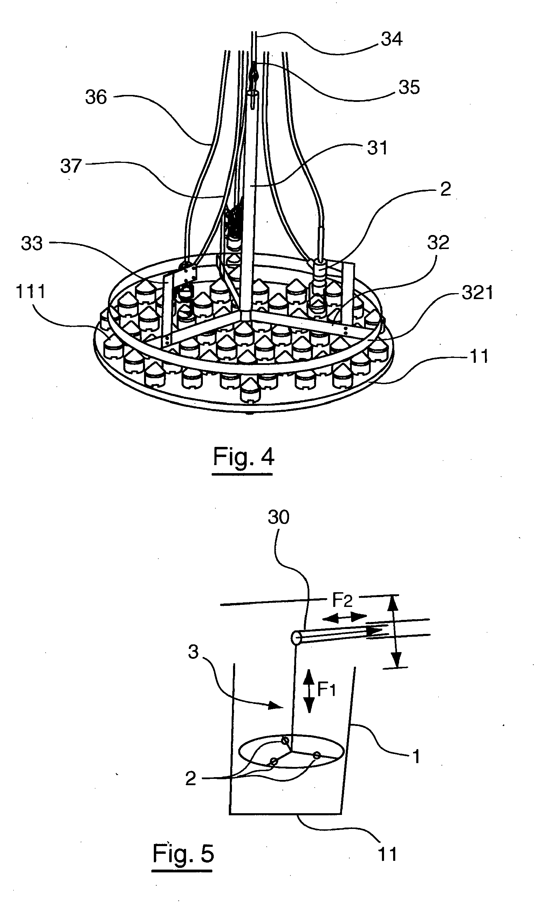

Le mode de réalisation de la figure 1 est destiné à équiper un dispositif de décarbonatation d'eau dont le principe est illustré de façon schématique par la figure 5 qui montre un réacteur 1 du type dans lequel l'eau brute à traiter est injectée au niveau du plancher 11, l'eau étant traitée par un agent alcalin au sein d'un matériau granuleux fin (par exemple du sable).

L'agent alcalin est injecté par des injecteurs 2 portés par une structure porteuse 3 mobile verticalement tel que symbolisé par la flèche F1.

On comprend que la structure porteuse 3 permet d'amener les injecteurs 2 hors de la cuve du réacteur dans une position escamotée, d'effectuer une opération de maintenance sur ceux-ci (et/ou à l'intérieur du réacteur), puis de les ramener à l'intérieur du réacteur dans une position active.

Préférentiellement, la structure porteuse 3 est montée sur un bras télescopique horizontal 30 permettant, une fois la structure porteuse 3 amenée en position escamotée, de déplacer celle-ci horizontalement tel que symbolisé par la flèche F2. Ceci permet d'amener la structure porteuse dans une position de dégagement, en côté du réacteur.

On note que les moyens assurant le déplacement vertical et éventuellement horizontal de la structure porteuse peuvent s'inscrire dans un espace relativement réduit en hauteur, s'étendant par exemple entre l'extrémité supérieure du réacteur et un plafond de bâtiment dans lequel est installé le réacteur.

Selon une solution préférée illustrée par la figure 4, la structure porteuse comprend un mat 31 destiné à s'étendre à l'intérieur du réacteur en coïncidence avec l'axe vertical de ce dernier, le mat 31 portant à son extrémité inférieure des extensions radiales 32 sur lesquelles sont rapportés les injecteurs tel que cela va être expliqué plus en détails par la suite.

Selon le présent mode de réalisation, le mat 31 porte trois extensions radiales 32 formant deux à deux un angle de 120°, un cerclage 321 étant solidarisé aux extrémités des extensions 32 en vue de former un ensemble rapide.

Le cerclage 321 est solidarisé aux extensions par exemple par soudure.

À son extrémité supérieure, le mat 31 est couplé à une élingue de levage 34 passant par une poulie montée et l'extrémité du bras télescopique mentionné précédemment, et relié à un treuil de levage distant.

Avantageusement, l'élingue 34 est accouplé au mat 31 de façon amovible, par exemple par l'intermédiaire d'une manille 35.

En outre, des conduits d'alimentation des injecteurs 2 s'étendent le long de la structure porteuse. En l'occurrence, on prévoit pour chaque injecteur 2 deux conduits d'alimentation souples, l'un destiné à acheminer de la soude, l'autre destiné à acheminer de l'eau adoucie.

La figure 4 montre une structure porteuse, telle qu'elle vient d'être décrite, en position active, c'est-à-dire au voisinage du plancher 11 du réacteur.

On note que le plancher 11 présente une pluralité de moyens d'introduction dans le réacteur d'eau à traiter, ces moyens d'introduction étant conçus sous forme de crépine 111.

On note également que le plancher 11 est avantageusement réalisé en un matériau PVC transparent, rigide et renforcé, tel que le matériau connu sous la désignation TRICOCLAIR (marque déposée).

Par ailleurs, les injecteurs 2 sont montés sur les extensions radiales 32 à l'aide de potences 33 décrites en référence à la figure 1.

Tel que cela apparaît sur la figure 1, les potences 33 sont réalisées par l'assemblage de plats métalliques 331, 332, par exemple soudés (les potences pouvant également être fabriquées d'un seul tenant) et sont prévues de façon à présenter les injecteurs 2 au-dessus des extensions 32.

Le plat 331 forme le montant de la potence et présente à sa base des orifices 3311 permettant le passage de moyens de fixations de la potence sur une extension, par exemple par boulonnage.

Le plat 332 est quant à lui destiné à porter un injecteur 2.

Pour cela, le corps 211 de l'injecteur 2 portant la buse 21 est fixé sur le plat 332 par l'intermédiaire de deux brides 3321 boulonnées sur le plat.

On note que le corps 211 présente deux embouts de raccordement 361, 371 respectivement aux conduits de soude 37 et d'eau adoucie 36 mentionnés précédemment, l'embout 361 s'étendant dans le prolongement axial du corps 211 et l'embout 371 s'étendant latéralement à partir du corps 221.

Dans cette configuration, les brides 3321 sont prévues avantageusement de part et d'autre de l'embout 371.

Les figures 2 et 3 illustrent un autre mode de réalisation selon lequel un injecteur 2 selon l'invention est monté fixe sur la paroi 12 d'un réacteur de décarbonatation.

Pour cela, l'injecteur est porté par un corps 2111 présentant un prolongement 2110 destiné à s'étendre perpendiculairement à la paroi 12 du réacteur.

Le prolongement 2110 du corps présente à l'une de ses extrémités une platine 4 destiné à coopérer avec une contre-platine 5 pour fixer l'injecteur sur la paroi 12, celle-ci étant intercalée au montage entre la platine 4 et la contre-platine 5 (la solidarisation de l'ensemble étant obtenue par boulonnage de ces dernières) qui vont alors chacune plaquée contre la paroi.

Un conduit 6 est intégré au prolongement 2110 et permet le raccordement à une alimentation en soude.

Le corps 2110 présente en outre une dérivation 7 permettant d'acheminer de l'eau adoucie vers l'injecteur.

## Revendications

1. Utilisation d'au moins un injecteur comprenant au moins une buse (21) associée à un organe de dispersion (22) présentant une forme conique pour injecter un jet de réactif alcalin au sein d'un réacteur (1) d'un dispositif de traitement de potabilisation de l'eau.

2. Utilisation selon la revendication 1, **caractérisée en ce que** ledit organe (22) est placé en regard de ladite buse (21) et présente une surface de dispersion s'étendant sur 360°.

3. Utilisation selon la revendication 2, **caractérisée en ce que** ledit organe présente une forme conique (221) dont le sommet est destiné à être centré par rapport audit jet.

4. Utilisation selon l'une des revendications 2 et 3, **caractérisée en ce que** ledit injecteur comprend des moyens d'ajustement de la distance séparant ladite buse (21) dudit organe (22).

5. Utilisation selon la revendication 4, **caractérisée en ce que** ledit injecteur est porté par un corps (21) présentant une portion cylindrique filetée (2111), ledit organe (22) comprenant une bague filetée (222) destinée à coopérer avec ladite portion cylindrique filetée (2111).

6. Utilisation selon la revendication 5, **caractérisée en ce que** ledit corps porte un contre-écrou (2112) monté sur ladite portion cylindrique filetée (2111) et destiné à être serré contre ladite bague filetée (222).

7. Utilisation selon les revendications 3 et 5, **caractérisée en ce que** ladite forme conique (221) et ladite bague filetée (222) sont reliées par une cage ajourée dans laquelle s'inscrit ladite buse.

8. Utilisation selon la revendication 7, **caractérisée en ce que** ladite cage est constituée par trois branches (223) réparties autour de ladite forme conique (221) avec un angle d'environ 120° entre elles.

## Patentansprüche

1. Verwendung mindestens eines Injektors, der mindestens eine Düse (21) aufweist, die mit einem Verteilorgan (22) verbunden ist, das eine konische Form aufweist, um einen Strahl eines alkalischen Reagenz innerhalb des Reaktors (1) einer Vorrichtung zur Trinkwasseraufbereitung einzuspritzen.

2. Verwendung nach Anspruch 1, **dadurch gekennzeichnet, dass** das Organ (22) gegenüber der Düse (21) angeordnet ist und eine Verteilfläche aufweist, die sich auf 360° erstreckt.

3. Verwendung nach Anspruch 2, **dadurch gekennzeichnet, dass** das Organ eine konische Form (221) aufweist, dessen Spitze dazu dient, in Bezug auf den Strahl zentriert zu sein.

4. Verwendung nach einem der Ansprüche 2 und 3, **dadurch gekennzeichnet, dass** der Injektor Mittel zur Einstellung der Entfernung, die die Düse (21) von dem Organ (22) trennt, aufweist.

5. Verwendung nach Anspruch 4, **dadurch gekennzeichnet, dass** der Injektor von einem Körper (21) getragen wird, der einen zylindrischen Abschnitt mit Gewinde (2111) aufweist, wobei das Organ (22) einen Gewindering (222) aufweist, der dazu dient, mit dem zylindrischen Abschnitt mit Gewinde (2111) zusammenzuwirken.

6. Verwendung nach Anspruch 5, **dadurch gekennzeichnet, dass** der Körper eine Gegenmutter (2112) trägt, die auf dem zylindrischen Abschnitt mit Gewinde (2111) befestigt ist und dazu dient, gegen den Gewindering (222) gepresst zu werden.

7. Verwendung nach den Ansprüchen 3 und 5, **dadurch gekennzeichnet, dass** die konische Form (221) und der Gewindering (222) durch einen Korb mit Öffnungen verbunden sind, mit dem die Düse in Verbindung steht.

8. Verwendung nach Anspruch 7, **dadurch gekennzeichnet, dass** der Korb aus drei Armen (223) gebildet ist, die um die konische Form (221) herum mit einem Winkel von etwa 120° zwischen ihnen verteilt sind.

## Claims

1. Use of at least one injector comprising at least one nozzle (21) associated with a dispersing member (22) having a cone shape for injecting a jet of alkaline reagent into a reactor (1) of a device for treating water to make it potable.

2. Use according to claim 1, **characterized in that** said member (22) is placed so as to be facing said nozzle (21) and has a dispersion surface extending over 360°.

3. Use according to claim 2, **characterised in that** said member has a cone shape (221), the peak of which is to be cantered relatively to said jet.

4. Use according to one of claims 2 and 3, **characterised in that** said injector comprises means for adjusting the distance between said nozzle (21) and said member (22).

5. Use according to claim 4, **characterised in that** said injector is carried by a body (21) having a threaded cylindrical portion (2111), said member (22) comprising a threaded ring (222) for cooperating with said threaded cylindrical portion (2111).

6. Use according to claim 5, **characterised in that** said body carries a locknut (2112) that is mounted on said threaded cylindrical portion (2111) and is to be tightly fitted against said threaded ring (222).

7. Use according to claims 3 and 5, **characterised in that** said cone shape (221) and said threaded ring (222) are connected by an open cage in which said nozzle is incorporated.

8. Use according to claim 7, **characterized in that** said cage is constituted by three arms (223) distributed around said cone shape (221) with an angle of about 120° between them.
